# EUROPEAN PATENT APPLICATION

(11) **EP 4 832 152 A1**
(43) Date of publication of application: **28.10.2026**
(21) Application number: 24907961.7
(22) Date of filing: 10.12.2024
(51) Int. Cl.: H01M 10/54, H01M 10/0585, H01M 4/38, H01M 4/02

(54) **BATTERY SHRED AND METHOD OF DISPOSING BATTERY**

(30) Priority: 18.12.2023 KR 20230185140
(71) Applicant: POSCO Holdings Inc., Pohang-si, Gyeongsangbuk-do 37859 (KR)
(72) Inventor: PARK, Junyong, Pohang-si, Gyeongsangbuk-do 37859 (KR); PARK, Joongkil, Pohang-si, Gyeongsangbuk-do 37859 (KR); PARK, Chonglyuck, Pohang-si, Gyeongsangbuk-do 37859 (KR); KIM, Wanyi, Pohang-si, Gyeongsangbuk-do 37859 (KR); HAN, Sangwoo, Pohang-si, Gyeongsangbuk-do 37859 (KR); LEE, Juseung, Pohang-si, Gyeongsangbuk-do 37859 (KR)
(74) Representative: Pfenning, Meinig & Partner mbB
(86) International application number: PCT/KR2024/020212
(87) International publication number: WO 2025/135677

(57) **Abstract**

The present invention relates to a battery shredded material and a battery treatment method. The battery shredded material of the present invention is a battery shredded material for recovering valuable metals from a waste battery, and includes a positive electrode, a negative electrode disposed on the positive electrode, and a separator disposed between the positive electrode and the negative electrode, wherein the negative electrode includes fluorine (F) in an amount of 5.0 wt% to 15.0 wt% based on 100 wt% of the entire negative electrode.

## Description

### [TECHNICAL FIELD]

The present invention relates to a waste battery, and more particularly, to a battery shredded material recovered from a battery treatment method and a battery treatment method.

### [BACKGROUND ART]

Due to environmental issues, electric vehicles, for which demand and supply are rapidly increasing, have battery technology as a key element. Waste batteries generated from the electric vehicles have become a social issue in terms of treatment of the waste batteries. Treatment of waste batteries generated from the electric vehicles has emerged as a social issue. Lithium ion batteries are used as the waste batteries, and contain organic solvents, explosive materials, heavy metal materials such as Ni, Co, Mn, Fe, and P, carbon, and other electrolyte materials. Among these, Ni, Co, Mn, Fe, P, and Li have high rarity value as valuable metals, and recovery and recycling processes after disposal of lithium secondary batteries are emerging as an important research field.

A process of recovering the waste battery generally includes disassembling, discharging, shredding, and heat-treating a battery to recover valuable metals. At this time, there is a risk of fire and explosion in the process of shredding the battery, and various methods for reducing such risk have been proposed.

One of the various methods is to discharge the battery to neutralize electrical energy. As a method of discharging the battery, brine discharge is performed, and at this time, elements such as Na, K, Mg, Ca, and Cl introduced therein are included as impurities in a recovered raw material, thereby causing a problem in that a recovery rate of valuable metals is reduced. In addition, a material recovered through the heat-treating process may be obtained as black powder in powder form in which valuable metal compounds, lithium compounds such as lithium carbonate, lithium aluminate, and lithium fluoride, and carbon of a negative electrode material are mixed.

At this time, when the battery is electrically discharged, lithium ions in a negative electrode move to a positive electrode. The lithium ions moved to the positive electrode exist in a lithium oxide state. If the electrical discharge is not performed, a relatively large amount of lithium ions remains in a state present in the negative electrode, and the lithium may exist in the form of lithium carbonate or lithium fluoride.

Among the lithium compounds, lithium carbonate and lithium fluoride are water-soluble and have characteristics of being easily leached in water, and lithium oxide in the positive electrode has characteristics of being easily leached in sulfuric acid. Accordingly, if lithium in the battery is secured in a structure that is easily leachable in water, it may be possible to recover lithium through water leaching.

As described above, in a battery treatment process, interest is increasing in a battery treatment method capable of securing stability and simultaneously increasing a recovery rate of valuable metals.

### [DETAILED DESCRIPTION OF THE INVENTION]

### [Technical Problem]

A technical problem to be solved by the present invention is to provide a battery shredded material having secured stability when introduced into a post-process and having a high content of valuable metals.

Another technical problem to be solved by the present invention is to provide a battery treatment method having secured stability and, at the same time, a high recovery rate of valuable metals.

### [Technical Solution]

A battery shredded material according to one embodiment of the present invention is a battery shredded material for recovering valuable metals from a waste battery, and may include a positive electrode, a negative electrode disposed on the positive electrode, and a separator disposed between the positive electrode and the negative electrode, wherein the negative electrode may include fluorine (F) in an amount of 5.0 wt% to 15.0 wt% based on 100 wt% of the entire negative electrode.

In one embodiment, the battery shredded material may satisfy the following Equation 1. <Equation 1> $0.25 \leq \left[Li\right] / \left[F\right] \leq 1.00$

In Equation 1, [Li] and [F] mean weight percentages of F and Cu, respectively, in the negative electrode in the battery shredded material.

In one embodiment, the negative electrode may have a peak including at least one of XRD peak values of 37.5° to 39.5°, 43° to 47°, 63.5° to 67.5°, 76.8° to 80.8°, and 81° to 85°. In one embodiment, the battery shredded material may satisfy the following Equation 2. <Equation 2> $0.6 \leq \left[first peak intensity\right] / \left[second peak intensity\right] \leq 1.0$

In Equation 2, [first peak intensity] and [second peak intensity] mean peak intensities in ranges of 37.5° to 39.5° and 43.0° to 47.0°, respectively, of the negative electrode.

In one embodiment, the negative electrode may include a lithium compound, and the lithium compound may include lithium fluoride. In one embodiment, the battery shredded material may satisfy the following Equation 3. <Equation 3> $\left[F\right] / \left[Cu\right] \leq 30$

In Equation 3, [F] and [Cu] mean weight percentages of F and Cu, respectively, in the negative electrode in the battery shredded material.

In one embodiment, the battery shredded material may have a layered structure including a separator on at least one surface of which the positive electrode or the negative electrode is stacked. In one embodiment, a content of fluorine in the negative electrode may be 1.0 wt% to 12.0 wt% based on 100 wt% of the negative electrode. In one embodiment, a content of lithium in the negative electrode may be 1.0 wt% to 5.0 wt% based on 100 wt% of the negative electrode.

A battery treatment method according to another embodiment of the present invention may include preparing a battery having a voltage of 2.0 V to 3.7 V, freezing the battery, and shredding the battery. In one embodiment, preparing the battery may include discharging the battery, and discharging the battery may include applying a current of 5 A or less. In another embodiment, discharging the battery may be performed for 4 hours to 8 hours.

In one embodiment, freezing the battery may cool the battery to -150°C to -20°C. In one embodiment, freezing the battery may be performed for 15 hours to 36 hours.

In one embodiment, the battery shredded material treated through the step of shredding the battery may include a negative electrode, and the negative electrode may have a content of fluorine (F) of 5.0 wt% to 15.0 wt% based on 100 wt% of the entire negative electrode. In one embodiment, the battery shredded material may satisfy the following Equation 1. <Equation 1> $0.25 \leq \left[Li\right] / \left[F\right] \leq 1.00$

In Equation 1, [Li] and [F] mean weight percentages of F and Cu, respectively, in the negative electrode in the battery shredded material.

### [Advantageous Effects]

The battery shredded material according to one embodiment of the present invention contains a high content of fluorine, thereby providing a battery shredded material having a high content of a lithium compound to which water leaching is easily applicable, securing stability, and increasing a recovery rate of valuable metals.

The battery treatment method according to another embodiment of the present invention provides a method of obtaining a battery shredded material having a high content of a lithium compound easily applicable to water leaching by performing low-temperature treatment and a shredding process according to an SOC state in a state in which lithium in a negative electrode in a battery remains without being discharged.

### [BRIEF DESCRIPTION OF THE DRAWINGS]

FIGS. 1A and 1B are photographs of a battery shredded material according to one embodiment of the present invention.
FIGS. 2A and 2B are XRD analysis results of negative electrode materials in shredded materials of an Example and a Comparative Example according to one embodiment of the present invention.
FIGS. 3A to 3C show SEM-EDS analysis results of a negative electrode material according to one embodiment of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are provided as examples, and the present invention is not limited thereto, and the present invention is only defined by the scope of the claims to be described below.

A battery shredded material according to one embodiment of the present invention is for recovering valuable metals from a waste battery, and may include a positive electrode, a negative electrode disposed on the positive electrode, and a separator disposed between the positive electrode and the negative electrode. Specifically, the battery shredded material may be a layered structure. More specifically, the battery shredded material is a layered structure composed of a plurality of layers, and the number of layers of the layered structure may correspond to the number of separators.

The layered structure may include, for example, positive electrode-separator-negative electrode or negative electrode-separator-positive electrode. For example, positive electrode-separator-negative electrode-separator-positive electrode-separator-negative electrode may have a three-layered structure. Specifically, as at least one or more layers are stacked, the battery shredded material may have a predetermined thickness in the thickness direction.

In one embodiment, the battery shredded material may satisfy the following Condition 1.

### <Condition 1>

The layered structure may be a stacked structure having one or more layers and seven or fewer layers.

The battery shredded material may have a layered structure having a stacked structure of one or more layers and seven or fewer layers. Specifically, the layered structure may be a stacked structure having one or more layers and five or fewer layers. As the layered structure is stacked within the above range, a temperature rise amount of the shredded material can be minimized, and a temperature-rising time can be appropriately required. When the layered structure is stacked thicker than the upper limit of the above range, there is a problem in that the temperature rise amount excessively increases and the temperature-rising time also increases, thereby causing combustion and fire.

In one embodiment, the battery shredded material may satisfy the following Condition 2.

### <Condition 2>

A size of the battery shredded material may be 100 mm or less based on a major axis, which is the longest axis among a width direction, a length direction, and a height direction.

In one embodiment, the battery shredded material may have a size of 100 mm or less based on the major axis. Specifically, the size of the battery shredded material may be 50 mm or less. When the size of the battery shredded material is excessively large, there is a problem in that the temperature of the battery shredded material itself rises to 100°C or higher, and thus a fire is highly likely to occur.

In one embodiment, the battery shredded material may satisfy the following Equation 1. <Equation 1> $0.25 \leq \left[Li\right] / \left[F\right] \leq 1.00$

In Equation 1, [Li] and [F] mean weight percentages of Li and F, respectively, in the negative electrode in the battery shredded material.

Equation 1 is a ratio of the contents of Li and F in the negative electrode among the battery shredded material, and may be a qualitative index of the formation amount of lithium fluoride among lithium compounds. Equation 1 may satisfy 0.25 to 1.00, specifically 0.57 to 1.00, more specifically 0.60 to 0.80, and still more specifically 0.60 to 0.65. As Equation 1 satisfies the above-described range, lithium and fluorine in the negative electrode can easily form a compound, and lithium fluoride (LiF) remains in the negative electrode, so that lithium fluoride can be easily separated from the negative electrode by water leaching in a post-process, thereby increasing a recovery rate of lithium.

When Equation 1 is outside the upper limit of the above-described range, it means that a ratio occupied by lithium fluoride among lithium compounds is small. When Equation 1 is outside the lower limit of the above-described range, there is a problem in that fluorine cannot form lithium fluoride due to a lack of lithium and forms another material, and among such materials, HF gas causes a problem of corrosion of equipment.

In one embodiment, the negative electrode may include a lithium compound, and the lithium compound may include lithium fluoride. When a waste battery is stabilized by forcibly discharging the waste battery, lithium ions move to a positive electrode in the battery, and lithium fluoride may be formed in the positive electrode. In the battery shredded material of the present invention, in the battery treatment method, through a step of freezing the battery while maintaining the voltage in the battery within a predetermined range, lithium does not move to the positive electrode but remains in the negative electrode, and accordingly, the lithium fluoride may be included in the negative electrode rather than the positive electrode.

As the lithium fluoride is included in the negative electrode rather than the positive electrode in the battery shredded material, the lithium fluoride can be easily separated by water leaching in a post-process. As the lithium fluoride is included in the negative electrode, there is an advantage in that separation is easy by water leaching without a complicated process.

In one embodiment, the negative electrode may have a peak including at least one of XRD peak values of 37.5° to 39.5°, 43° to 47°, 63.5° to 67.5°, 76.8° to 80.8°, and 81.0° to 85.0°. Since the negative electrode includes lithium fluoride as a lithium compound, the negative electrode may have the above-described peak values.

In one embodiment, the battery shredded material may satisfy the following Equation 2. <Equation 2> $0.6 \leq \left[first peak intensity\right] / \left[second peak intensity\right] \leq 1.0$

In Equation 2, [first peak intensity] and [second peak intensity] mean peak intensities in ranges of 37.5° to 39.5° and 43° to 47°, respectively, of the negative electrode.

Equation 2 is a peak intensity ratio for lithium fluoride in the negative electrode among the battery shredded material, and may be an index capable of confirming whether lithium fluoride remains in the negative electrode according to whether the battery is discharged. Equation 2 may satisfy 0.6 to 1.0. Specifically, Equation 2 may satisfy 0.7 to 0.9.

As Equation 2 satisfies the above-described range, lithium fluoride is appropriately included in the negative electrode among the battery shredded material, and thus lithium fluoride can be easily separated from the negative electrode by water leaching in a post-process, thereby increasing a recovery rate of lithium.

In one embodiment, the battery shredded material may satisfy the following Equation 3. <Equation 3> $\left[F\right] / \left[Cu\right] \leq 30$

In Equation 3, [F] and [Cu] mean weight percentages of F and Cu, respectively, in the negative electrode in the battery shredded material.

Equation 3 is a content ratio of fluorine to copper in the negative electrode among the battery shredded material, and may be an index capable of confirming whether lithium fluoride remains in the negative electrode according to whether the battery is discharged. Equation 3 may satisfy 30 or less, specifically 20 or less, more specifically 10 or less, and still more specifically 2 to 8. As Equation 3 satisfies the above-described range, lithium fluoride is appropriately included in the negative electrode among the battery shredded material, and thus lithium fluoride can be easily separated from the negative electrode by water leaching in a post-process, thereby increasing a recovery rate of lithium.

In one embodiment, the content of fluorine in the negative electrode may be 1.0 wt% to 12.0 wt% based on 100 wt%. Specifically, the content of fluorine may be 2.0 wt% to 8.5 wt%, specifically 2.3 wt% to 6.0 wt%, and more specifically 3.0 wt% to 5.5 wt%. As the content of fluorine in the negative electrode satisfies the above-described range, a lithium compound such as lithium fluoride is appropriately formed in the negative electrode, and the lithium compound can be easily separated in a post-process, thereby increasing a recovery rate of lithium.

In one embodiment, the content of lithium in the negative electrode may be 1.0 wt% to 5.0 wt% based on 100 wt%. Specifically, the content of lithium may be 1.3 wt% to 4.3 wt%, and specifically 2.0 wt% to 3.5 wt%. As the content of fluorine in the negative electrode satisfies the above-described range, a lithium compound such as lithium fluoride is appropriately formed in the negative electrode, and the lithium compound can be easily separated in a post-process, thereby increasing a recovery rate of lithium.

Since the negative electrode includes lithium and fluorine at the same time, a lithium compound such as lithium fluoride may be formed. When the content of fluorine is excessively high, other fluorine-containing materials such as HF, in addition to lithium fluoride, may be generated. When the contents of lithium and fluorine are excessively low, there is a problem in that actual yield decreases.

A battery treatment method according to another embodiment of the present invention may include preparing a battery, freezing the battery, and shredding the battery. Specifically, the battery treatment method of the present invention may be a battery treatment method for freezing and then shredding a battery having a predetermined voltage, so that lithium fluoride is not formed in a positive electrode by movement of lithium ions to the positive electrode during a separate discharge process, but is formed in a negative electrode and thus the lithium fluoride can be easily separated in a post-process by a method such as water leaching.

The step of preparing the battery may be a step of preparing a battery having a voltage of 3.0 V to 4.5 V. The battery may be, for example, a lithium secondary battery separated from a vehicle, a secondary battery separated from an electronic device such as a mobile phone, a camera, or a laptop computer, specifically a lithium secondary battery. The battery may have a voltage of about 4.2 V to 4.5 V under an SOC condition of 100%.

The step of preparing the battery may include controlling a battery having a voltage of 3.0 V to 4.5 V to a voltage of 1.5 V to 3.7 V. Specifically, the battery of the present invention may be controlled to have a voltage of 1.5 V to 3.7 V. Specifically, the voltage may be 2.0 V to 3.7 V. As the battery has a voltage within the above-described range, there is an advantage in that the battery can be stably shredded through cryogenic treatment.

When the battery has a voltage higher than the above-described range, there is a problem in that fire occurs during or after shredding even when cryogenic treatment is performed. When the battery has a voltage lower than the above-described range, there is a problem in that the content of lithium fluoride in the negative electrode is excessively low, and the recovery rate of lithium decreases.

The step of preparing the battery includes discharging the battery, and the step of discharging the battery may include applying a current of 5 A or less. Specifically, the current may be controlled to 3 A or less, and more specifically 2 A or less. By controlling the voltage of the battery in the above current range, there is an advantage in that it is easy to control the degree of rebound in which the voltage rises again after discharge of the battery. When the battery is discharged in a current range higher than the above current range, the degree of rebound increases, thereby causing a problem in that stabilization of the battery is difficult.

In one embodiment, the step of discharging the battery may be performed for 4 hours to 8 hours. Specifically, the step of discharging the battery may be performed for 5 hours to 7 hours. As the battery is discharged in the above-described current range, the battery is slowly discharged, and thus discharge may be performed for the above-described time. As the battery is discharged according to the above-described range, the degree of rebound after discharge of the battery is lowered, and thus there is an advantage in that stabilization of the battery is easy.

In one embodiment, the step of freezing the battery is performed at a temperature sufficient to freeze an electrolyte included in the battery. Specifically, the freezing step may be performed, for example, at a temperature range of -150°C to -20°C. More specifically, the temperature range may be -100°C to -20°C, and still more specifically -90°C to -40°C.

When the battery is frozen in the above temperature range, a voltage minutely remaining inside the battery, for example, a voltage of about 2 V to 3 V, decreases close to 0 V. Accordingly, even when a short circuit occurs in which a positive electrode and a negative electrode directly contact each other, a battery reaction does not occur, and thus the battery temperature does not increase, and gas generation and combustion of the electrolyte do not occur. In addition, since the electrolyte is in a frozen state or in a state in which vaporization is suppressed, mobility of lithium ions is very low, and conduction characteristics due to the movement of the lithium ions can be remarkably reduced, and since vaporization of the electrolyte solution does not occur, flammable gases of ethylene, propylene, and hydrogen may not be generated.

When the freezing process is outside the above temperature range, the voltage remaining inside the battery does not decrease to 0 V, and a battery reaction due to a short circuit may occur, and the electrolyte is not completely frozen, which is not appropriate. As described above, the battery treatment method includes freezing a battery such as a lithium secondary battery before shredding the battery, whereby there is an advantage in that a risk of fire that may occur in the battery shredding process can be prevented.

In one embodiment, the step of freezing the battery may be performed for 10 hours to 36 hours. The step of freezing the battery may be performed for 12 hours to 30 hours, specifically 12 hours to 24 hours. By performing the step of freezing the battery within the above time range, battery stabilization is easily performed, and when the battery is shredded, fire can be prevented from occurring from the battery.

When the step of freezing the battery takes an excessively longer time than the above time, there is a problem in terms of economic feasibility. When the step of freezing the battery is performed for an excessively shorter time than the above time, there is a problem in that battery stabilization is not easily performed.

The step of shredding the frozen battery may mean a process of applying impact or pressure to the battery so that a portion of the battery is separated from the battery. In one embodiment, the step of shredding the battery may mean all of a process of pulverizing the battery, a process of cutting the battery, a process of compressing the battery, and a combination thereof. Specifically, the shredding step may include all processes capable of destroying the battery to obtain shredded pieces having a small size.

In one embodiment, the step of shredding the battery may include all processes of compressing the frozen battery, or destroying the battery by applying external force such as shear force or tensile force. The step of shredding the battery may be performed, for example, using a shredder.

In one embodiment, the step of shredding the battery may be performed at least once or more. Specifically, the shredding step may be performed continuously or discontinuously at least once or more.

In one embodiment, the step of shredding the battery may be performed under a condition of supplying an inert gas, carbon dioxide, nitrogen, water, or a combination thereof, or under a vacuum atmosphere condition of 100 torr or less. For example, when the process of freezing the battery is performed by cooling at a temperature range of -90°C to -20°C, if the process is performed under the above-described conditions, oxygen supply can be suppressed, whereby an electrolyte can be prevented from reacting with oxygen, explosion caused thereby can be prevented, and vaporization of the electrolyte solution can be suppressed, so that flammable gases such as ethylene, propylene, or hydrogen may not be generated.

Hereinafter, preferred Examples and Comparative Examples of the present invention will be described. However, the following Examples are merely preferred embodiments of the present invention, and the present invention is not limited to the following Examples.

### <Experimental Example>

### <Example 1>

### Battery Preparation Step

An NCM622 lithium ion battery having a voltage of about 4.2 V when the SOC was 100% was prepared. Thereafter, a step of measuring the voltage of the battery was performed. At this time, a battery having a final voltage of 3.7 V and SOC 50% was prepared by applying a current of 5 A to the initial battery, discharging the battery to 1.0 V within 1 hour, and then checking the degree of rebound for 24 hours.

At this time, by controlling the current within the above range, it was confirmed that, when the battery was discharged to 0 V, the voltage rebounded to 2.5 V. However, when the battery was discharged at 10 A, which is 6 A or more, there was a problem in that the battery was discharged to 0 V within 3 hours and then rebounded to 3 V. Accordingly, in Example 1, the step of slowly discharging the battery at a low current was performed.

### Cryogenic Treatment Step

The battery was subjected to cryogenic treatment at -60°C for 24 hours.

### Battery Shredding Step

The battery subjected to the cryogenic treatment was shredded in a particle size range of 5 mm to 80 mm using a two-shaft two-stage shredder.

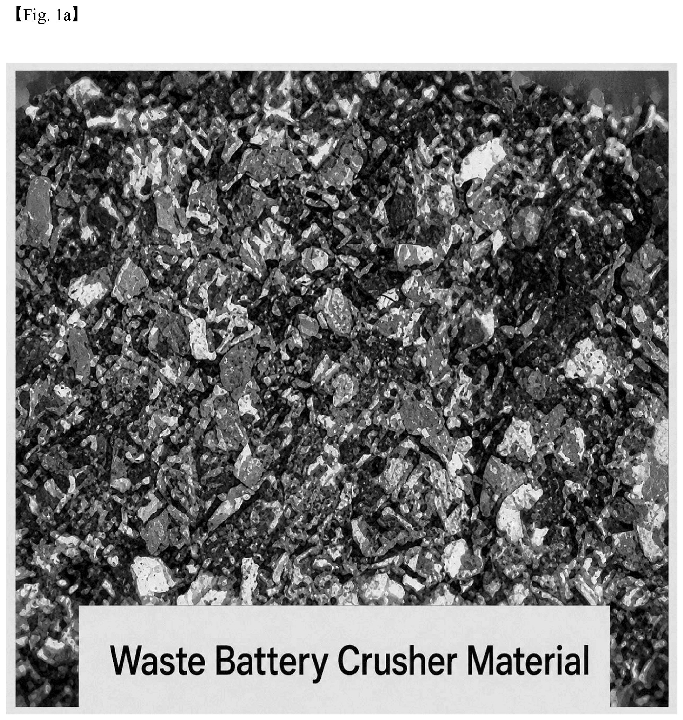

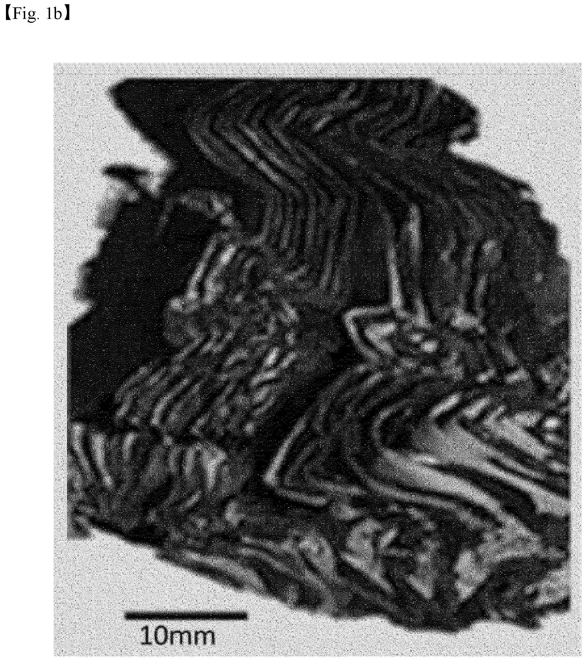

FIGS. 1A and 1B are photographs of a battery shredded material according to one embodiment of the present invention.

Referring to FIGS. 1A and 1B, it can be confirmed that, in the battery shredded material according to one embodiment of the present invention, the positive electrode, the negative electrode, and the separator have a layered structure, and the size of the shredded material is 100 mm or less.

### <Example 2>

The same procedure as in Example 1 was performed, except that, in the step of measuring the voltage of the battery, a battery was prepared by applying a current of 3 A and discharging the battery within 1 hour so that the voltage became 2.0 V.

### <Comparative Example 1>

The same procedure as in Example 1 was performed, except that, in the step of preparing the battery, electrical discharge was performed on a battery having a voltage of 3.5 V by applying a current of 5 A, the battery was discharged to 0 V within 2 hours, and the battery was controlled to finally have a voltage of 0.5 V or less, and then a separate cryogenic treatment step was not performed.

Table 1 below shows component analysis results of a negative electrode material in a shredded material according to battery voltage. The battery voltage and component analysis of the negative electrode material were measured by the following methods.

Battery voltage (V): The battery voltage in Table 1 below indicates the voltage of the battery that rebounded after discharging the voltage of the initial battery, and the voltage of the battery was measured by bringing a positive electrode and a negative electrode of the battery into contact with terminals using a voltage measuring device.

Component analysis: The negative electrode material in the shredded material was extracted by particle size screening, a lithium (Li) component in the negative electrode material was analyzed using an ICP (Inductively Coupled Plasma) apparatus, a fluorine (F) component was measured using combustion ion chromatography of Dionex, and a carbon (C) component was analyzed using a C/S apparatus of LECO.

**[Table 1]**

| | Battery | Component Analysis Values in Negative Electrode Material Among Shredded Material [wt%] | | | |
|---|---|---|---|---|---|
| | Voltage [V] | Li | C | F | Equation 1 |
| Comparative Example 1 | 0.5 or less | 0.8 | 98.6 | 0.5 | 1.60 |
| Example 1 | 3.7 | 2.9 | 92.5 | 4.6 | 0.63 |
| Example 2 | 2.0 | 1.3 | 96.4 | 2.3 | 0.57 |
| Equation 1: Li [wt%]/F [wt%] | | | | | |

Referring to Table 1, it was confirmed that, in Comparative Example 1 in which electrical discharge was performed, most of the lithium component was located in the positive electrode sample, and thus the lithium content was low, and fluorine remaining while forming a compound with the lithium also had a low value. In contrast, in the shredded material of Example 1, in which non-discharge cryogenic treatment was performed on a battery having a relatively high voltage, the lithium content and fluorine content in the negative electrode material were measured to be high.

It was confirmed that a battery having a voltage lower than that of Example 1 had lithium and fluorine contents in the negative electrode material of the shredded material that were higher than those of Comparative Example 1 but lower than those of Example 1. This means that, in a battery having a high voltage, relatively more lithium ions are located on the negative electrode side, and because lithium located in the negative electrode easily reacts with surrounding fluorine to form and remain as lithium fluoride, the negative electrode material in the shredded material of Example 1 having a high battery voltage has higher lithium and fluorine contents than the negative electrode material in the shredded material of Example 2 having a low battery voltage.

In addition, in the case of a battery having a voltage higher than that of Example 1, for example, a voltage of 4.0 V, it was confirmed that a problem occurred in which fire occurred during the shredding process even when low-temperature treatment was performed, and thus battery treatment was not appropriate.

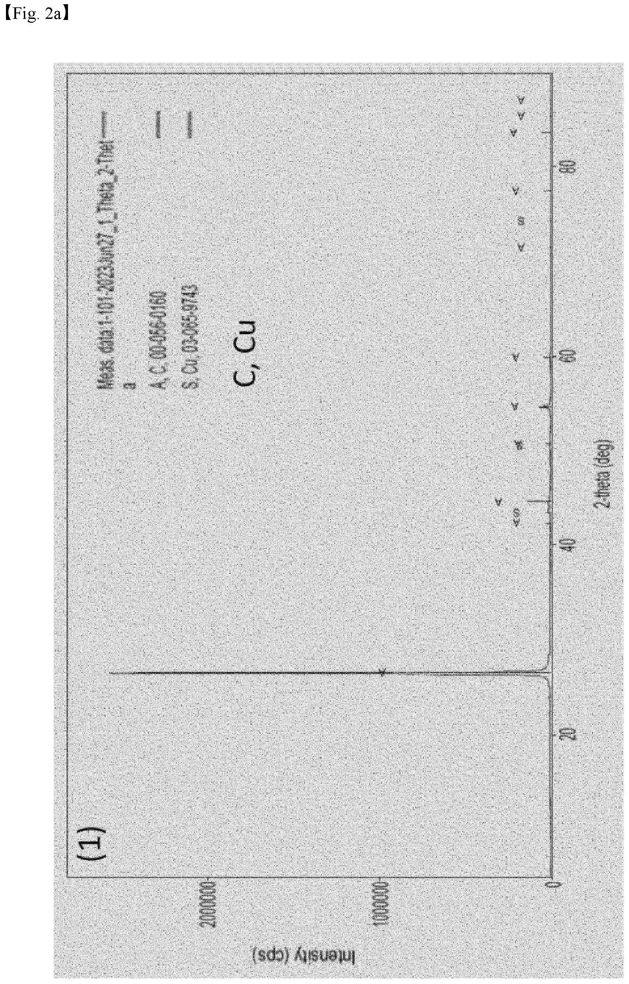

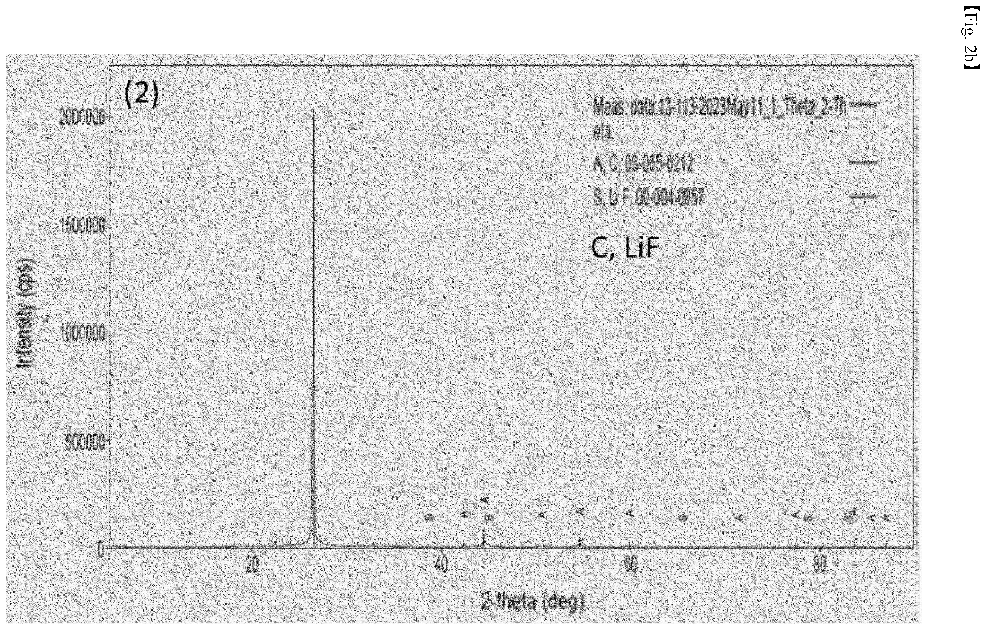

FIGS. 2A and 2B are XRD analysis results of negative electrode materials in shredded materials of an Example and a Comparative Example according to one embodiment of the present invention.

FIGS. 2A and 2B are graphs obtained by extracting negative electrode materials from the shredded materials of Example 1 and Comparative Example 1, respectively, and performing XRD analysis. The XRD analysis was performed by measuring intensity diffracted by angle using an X-ray diffraction analyzer of RIGAKU.

Referring again to FIG. 2A, when electrical discharge was performed, lithium excessively moved to the positive electrode material among the battery shredded material during the discharge process, and thus only materials such as C or Cu were detected in the negative electrode material, and peak values of lithium and fluorine were not confirmed.

Referring again to FIG. 2B, when a 3.5 V battery was subjected to non-discharge cryogenic treatment, it was confirmed that the negative electrode material in the shredded material included not only C but also LiF peaks. This was expressed because discharge was not performed, and lithium and fluorine remaining in the negative electrode material remained as they were in the negative electrode material through the cryogenic process.

Table 2 below shows peak values according to XRD peak values of the negative electrode material according to one embodiment of the present invention.

**[Table 2]**

| Classification | LiF | | | Equation 2 |
|---|---|---|---|---|
| | First Peak [cps] | Second Peak [cps] | Third Peak [cps] | First Peak / Second Peak |
| Comparative Example 1 | - | - | - | - |
| Example 1 | 16131.5 | 33641.2 | 7133.92 | 0.48 |
| Example 2 | 8007.5 | 32298.1 | 4615.99 | 0.25 |
| First peak: peak intensity at 37.5° to 39.5° | | | | |
| Second peak: peak intensity at 43.0° to 47.0° | | | | |
| Third peak: peak intensity at 63.5° to 67.5° | | | | |

Referring to Table 2, it was confirmed that no LiF peak was confirmed in Comparative Example 1. In Examples 1 and 2, it was confirmed that LiF peaks occurred in the negative electrode material, and Equation 2 was included in the range of the present invention. This means that, in a battery having a high voltage, relatively more lithium ions are located on the negative electrode side, and lithium located in the negative electrode easily reacts with surrounding fluorine to form and remain as lithium fluoride. Thus, it was confirmed that LiF peaks were confirmed in Examples 1 and 2 having high battery voltages, and the ratio of the second peak to the first peak satisfied the range of the present invention.

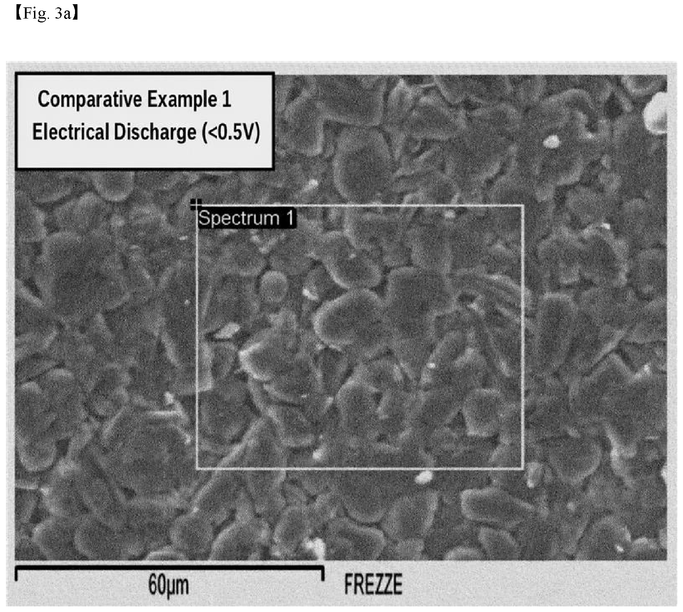

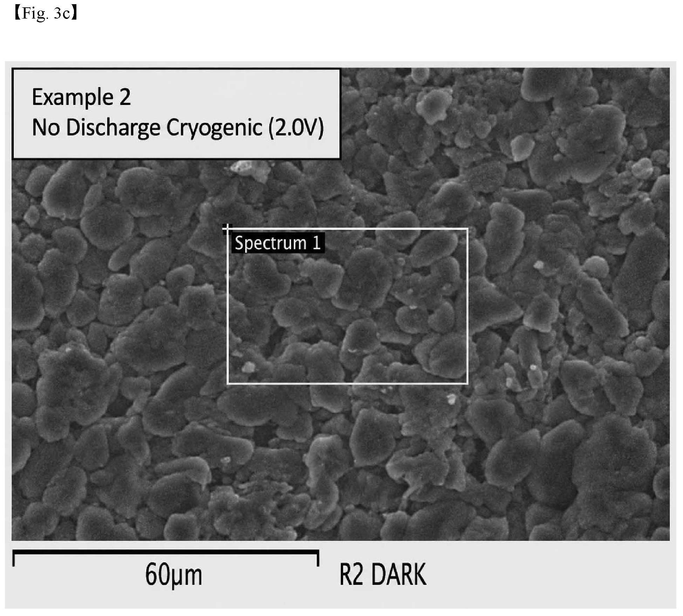

FIGS. 3A to 3C show SEM-EDS analysis results of a negative electrode material according to one embodiment of the present invention.

FIGS. 3A to 3C are SEM-EDS analysis results of Comparative Example 1, Example 1, and Example 2 of the present invention, respectively.

Table 3 below shows SEM-EDS analysis results of the negative electrode material according to one embodiment of the present invention.

The SEM-EDS of the negative electrode material was measured using an SEM-EDS apparatus of JEOL.

**[Table 3]**

| | C [wt%] | O [wt%] | F [wt%] | Cu [wt%] | Al [wt%] | P [wt%] | Mn [wt%] | Co [wt%] | Ni [wt%] | Equation 3 |
|---|---|---|---|---|---|---|---|---|---|---|
| Com parat | 83.17 | 8.46 | 4.32 | 0.83 | 0.73 | 0.84 | - | - | 0.33 | 32.0 |
| ive Exa mple 1 | | | | | | | | | | |
| Exa mple 1 | 77.67 | 8.88 | 10.87 | 0.34 | 0.39 | 1.42 | 0.17 | 0.06 | 0.18 | 5.2 |
| Exa mple 2 | 82.62 | 8.61 | 6.43 | 0.84 | 0.74 | 0.10 | 0.17 | 0.14 | 0.34 | 7.7 |
| Equation 3: F [wt%]/Cu [wt%] | | | | | | | | | | |

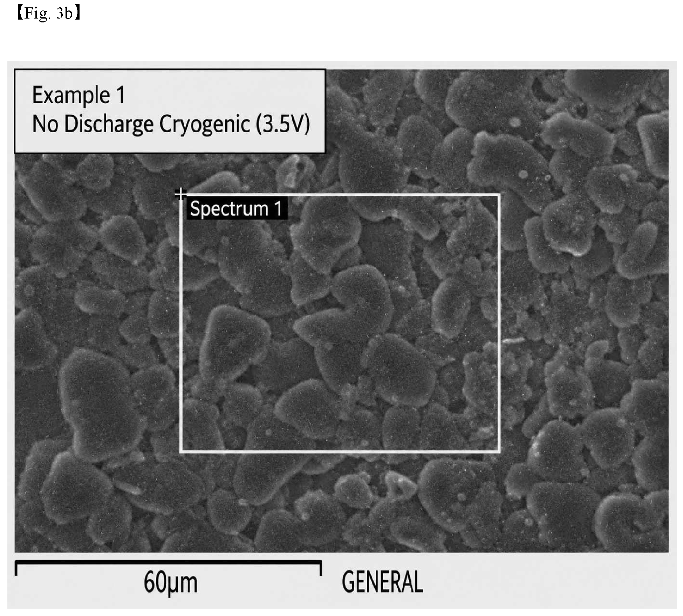

Referring to FIGS. 3A and 3B and Table 3, it can be confirmed that, in Comparative Example 1, lithium moved to the positive electrode during the forced discharge process, and thus the content of fluorine was low. In contrast, in Examples 1 and 2, as lithium remained in the negative electrode, lithium and fluorine reacted in the negative electrode to form lithium fluoride, and thus it can be confirmed that the content of fluorine was high. Accordingly, an excessive amount of lithium fluoride was formed in the Examples, and the recovery rate of valuable metals can be increased through water leaching in a post-process.

Although preferred embodiments have been described in detail above, the scope of rights of the present invention is not limited thereto, and various modifications and improvements made by a person having ordinary skill in the art using the basic concept defined in the following claims also fall within the scope of rights of the present invention.

## Claims

1. A battery shredded material for recovering valuable metals from a waste battery, comprising:
a positive electrode;
a negative electrode disposed on the positive electrode; and
a separator disposed between the positive electrode and the negative electrode,
wherein the negative electrode comprises fluorine (F) in an amount of 5.0 wt% to 15.0 wt% based on 100 wt% of an entire negative electrode.

2. The battery shredded material of claim 1,
wherein the battery shredded material satisfies the following Equation 1: <Equation 1> $0.25 \leq \left[Li\right] / \left[F\right] \leq 1.00$
wherein, in Equation 1, [Li] and [F] mean weight percentages of F and Cu, respectively, in the negative electrode in the battery shredded material.

3. The battery shredded material of claim 1,
wherein the negative electrode has a peak including at least one of XRD peak values of 37.5° to 39.5°, 43° to 47°, 63.5° to 67.5°, 76.8° to 80.8°, and 81° to 85°.

4. The battery shredded material of claim 1,
wherein the battery shredded material satisfies the following Equation 2: <Equation 2> $0.6 \leq \left[first peak intensity\right] / \left[second peak intensity\right] \leq 1.0$
wherein, in Equation 2, [first peak intensity] and [second peak intensity] mean peak intensities in ranges of 37.5° to 39.5° and 43.0° to 47.0°, respectively, of the negative electrode.

5. The battery shredded material of claim 1,
wherein the negative electrode comprises a lithium compound, and
wherein the lithium compound comprises lithium fluoride.

6. The battery shredded material of claim 1,
wherein the battery shredded material satisfies the following Equation 3: <Equation 2> $\left[F\right] / \left[Cu\right] \leq 30$
wherein, in Equation 3, [F] and [Cu] mean weight percentages of F and Cu, respectively, in the negative electrode in the battery shredded material.

7. The battery shredded material of claim 1,
wherein the battery shredded material has a layered structure including a separator on at least one surface of which the positive electrode or the negative electrode is stacked.

8. The battery shredded material of claim 1,
wherein a content of fluorine in the negative electrode is 1.0 wt% to 12.0 wt% based on 100 wt% of the negative electrode.

9. The battery shredded material of claim 1,
wherein a content of lithium in the negative electrode is 1.0 wt% to 5.0 wt% based on 100 wt% of the negative electrode.

10. A battery treatment method, comprising:
preparing a battery having a voltage of 3.0 V to 4.5 V;
freezing the battery; and
shredding the battery,
wherein preparing the battery comprises controlling the battery having a voltage of 3.0 V to 4.5 V to a voltage of 1.5 V to 3.7 V.

11. The battery treatment method of claim 10,
wherein preparing the battery comprises discharging the battery, and
wherein discharging the battery comprises applying a current of 5 A or less.

12. The battery treatment method of claim 11,
wherein discharging the battery is performed for 4 hours to 8 hours.

13. The battery treatment method of claim 10,
wherein freezing the battery comprises cooling the battery to -150°C to -20°C.

14. The battery treatment method of claim 10,
wherein freezing the battery is performed for 15 hours to 36 hours.

15. The battery treatment method of claim 10,
wherein a battery shredded material treated through shredding the battery comprises a negative electrode, and
wherein the negative electrode has a content of fluorine (F) of 5.0 wt% to 15.0 wt% based on 100 wt% of an entire negative electrode.

16. The battery treatment method of claim 15,
wherein the battery shredded material satisfies the following Equation 1: <Equation 1> $0.25 \leq \left[Li\right] / \left[F\right] \leq 1.00$
wherein, in Equation 1, [Li] and [F] mean weight percentages of F and Cu, respectively, in the negative electrode in the battery shredded material.
